# EUROPÄISCHE PATENTSCHRIFT

(11) **EP 3 651 563 B1**
(45) Veröffentlichungstag und Bekanntmachung des Hinweises auf die Patenterteilung: **03.08.2022**
(21) Anmeldenummer: 18742940.2
(22) Anmeldetag: 28.06.2018
(51) Int. Cl.: A01D 33/02

(54) **VORRICHTUNG ZUR VERHINDERUNG EINES AUFSTAUENS VON KRAUT UND ZUGEHÖRIGE ERNTEMASCHINE**
DEVICE FOR PREVENTING AN ACCUMULATION OF LEAVES AND STEMS AND ASSOCIATED HARVESTING MACHINE
DISPOSITIF PERMETTANT D'EMPÊCHER TOUTE ACCUMULATION DE FANES ET MACHINE DE RÉCOLTE ASSOCIÉE

(30) Priorität: 14.07.2017 DE 102017115839
(43) Veröffentlichungstag der Anmeldung: 20.05.2020
(73) Patentinhaber: Grimme Landmaschinenfabrik GmbH & Co. KG, 49401 Damme (DE)
(72) Erfinder: DETTMER, Franz-Josef, 49577 Ankum (DE); BELLERSEN, Werner, 49393 Lohne (DE); FELDKÄMPER, Stefan, 59387 Ascheberg (DE)
(74) Vertreter: Wischmeyer, André
(86) Internationale Anmeldenummer: PCT/EP2018/067469
(87) Internationale Veröffentlichungsnummer: WO 2019/011663

(56) Entgegenhaltungen:
- EP-A1- 0 867 107
- EP-A1- 1 297 731
- DE-C1- 4 304 785
- US-A- 4 967 848

## Beschreibung

Die vorliegende Erfindung betrifft eine Erntemaschine für mit abzutrennendem Kraut versehenes Erntegut, wobei die Erntemaschine eine Fördervorrichtung und ein Rahmenelement aufweist, an dem wenigstens ein einen Gutstrom transportierender Förderabschnitt entlangführt.

Gezogene oder selbstfahrende Erntemaschinen weisen oftmals entgegen der Fahrtrichtung Erntegut wie Kartoffeln, Möhren oder Rüben transportierende Förderabschnitte zum Beispiel in Form von Förderbändern auf. Aufgrund der häufig mehrreihigen und daher entsprechend breiten Ernteorgane teilen sich mitunter breitere, ein- oder mehrreihige Fördermittel, vorzugsweise in Form von Förderbändern, in das Erntegut nach hinten entgegen der Fahrtrichtung transportierende, nebeneinander her laufende Förderabschnitte auf. Zwischen zwei Förderabschnitten ist oftmals ein Rahmenelement angeordnet, das beispielsweise Teil eines Maschinenrahmens ist und/oder an dem tragende Teile der Förderabschnitte angeordnet sind. Ebenfalls kann ein Rahmenelement einen Förderabschnitt außenseitig, d.h. insbesondere in Fahrtrichtung der Erntemaschine links oder rechts einer Förderstrecke für das Erntegut begrenzen.

Die DE 43 04 785 offenbart eine Fördervorrichtung, die eine Seite eines Förderbereichs ausbildet, von dessen Einlauf her Kraut mit anhängenden Kartoffeln zu einer Trennvorrichtung 3 gefördert werden kann.

In der EP 1 297 731 A1 ist ein Krauttrennband offenbart, welches ebenfalls einen Förderbereich begrenzt, durch den von dessen Einlauf her Kraut zu einer Trennvorrichtung geführt wird.

Eine in der EP 0 867 107 A1 offenbarte Erntemaschine umfasst eine Fördervorrichtung, eine Trennvorrichtung und eine Führungseinheit, wobei Kraut derart ergriffen wird, dass es von einem Fördermittel, auf dem die Kartoffeln weitertransportiert werden, entfernt wird.

Aus der US 49 67 848 ist es bekannt, dass eine Fördervorrichtung eine Seite eines Förderbereichs ausbildet, durch den von dessen Einlauf Kraut zur Trennvorrichtung gefördert werden kann.

In dem Gutstrom werden neben dem eigentlichen Erntegut Kluten, Kraut und anderes aus dem Gutstrom zu entfernendes Material transportiert. Insbesondere das Kraut staut sich an dem oftmals angewinkelt aus der Förderebene herausführenden Rahmenelement. Es ist im Stand der Technik bekannt, eine Vorrichtung zur Verhinderung eines Aufstauens von in einem aufgrund des Rahmenelements aufzuteilenden Gutstrom der Erntemaschine vorhandenen Kraut vor dem Rahmenelement zu verwenden. Diese Vorrichtung soll auf den Rahmen auflaufendes Kraut wieder in den Gutstrom oder aus der Erntemaschine leiten.

Es hat sich jedoch herausgestellt, dass mit zunehmenden Fördermengen diese Vorrichtungen nicht ausreichen, um ein Aufstauen zu verhindern.

Es ist daher Aufgabe der vorliegenden Erfindung, eine Erntemaschine mit einer vorbezeichneten Vorrichtung zu verbessen.

Die Aufgabe wird gelöst durch eine Erntemaschine nach Anspruch 1. Vorteilhafte Weiterbildungen der Erfindung sind den auf diese Ansprüche rückbezogenen Unteransprüchen sowie der nachfolgenden Beschreibung zu entnehmen.

Eine erfindungsgemäße Erntemaschine für mit abzutrennendem Kraut versehenes Erntegut weist wenigstens einen einen im Betrieb vorhandenen Gutstrom transportierenden Förderabschnitt auf, der an dem Rahmenelement entlangführt. Erfindungsgemäß ist die Erntemaschine mit einer Vorrichtung zur Verhinderung des Aufstauens von in dem Gutstrom der Erntemaschine vorhandenen Kraut an dem Rahmenelement und mit einer drehbaren Führungseinheit versehen, wobei die Führungseinheit und die Fördervorrichtung zwischen sich den Förderbereich ausbilden. Die Vorrichtung zur Verhinderung des Aufstauens von Kraut weist wenigstens eine Fördervorrichtung und eine Trennvorrichtung auf, wobei die Fördervorrichtung eine Seite eines Förderbereichs ausbildet, durch den von einem Einlauf des Förderbereichs zu förderndes Kraut zu der vorzugsweise am Ende des Förderbereichs befindlichen Trennvorrichtung gefördert werden kann. Durch die Fördervorrichtung kann eine definierte Zuführung des aufstauenden Krauts durch den Förderbereich hin zu der Trennvorrichtung realisiert werden, wo das Kraut dann geschnitten wird und sich somit nicht an einem insbesondere hinter der Trennvorrichtung anzuordnendem Teil des Rahmenelements aufstauen kann.

Erfindungsgemäß ist die Erntemaschine mit einer drehbaren Führungseinheit versehen, wobei die Führungseinheit und die Fördervorrichtung zwischen sich den Förderbereich ausbilden. Die Führungseinheit und die Fördervorrichtung bilden zwischen sich einen Förderbereich aus, durch den von einem Einlauf des Förderbereichs zu förderndes Kraut zu der vorzugsweise am Ende des Förderbereichs befindlichen Trennvorrichtung gefördert werden kann. Durch die Fördervorrichtung kann eine definierte Zuführung des aufstauenden Krauts durch den Förderbereich hin zu der Trennvorrichtung realisiert werden, wobei durch die drehbare Führungseinheit einerseits eine direkte Rückführung von aufstauendem Kraut in den Gutstrom versucht und dieses gleichzeitig möglichst prozesssicher der Trennvorrichtung zugeführt wird. Die Trennvorrichtung zerlegt oder teilt das auflaufende und noch nicht aus dem Förderbereich durch die Führungseinheit herausgeförderte Kraut, so dass die entstehenden Krautsegmente auf vorzugweise unterschiedlichen Seiten des Rahmenelements in den Gutstrom überführt werden. Die Fördervorrichtung kann das getrennte Kraut vorzugsweise gezielt in die Richtung des im Betrieb angrenzenden Gutstroms weiter fördern, wobei insbesondere die Fördergeschwindigkeit und/oder die Geschwindigkeit mit der die Trennvorrichtung arbeitet an den Zustand oder die Art des zu trennenden Krauts angepasst werden kann.

Bei einer einfach herzustellenden erfindungsgemäßen Weiterbildung ist die Führungseinheit durch ein an dem Rahmenelement anzuordnendes Blech ausgebildet, welches eine Seite des Förderbereichs begrenzt.

Vorteilhafterweise ist im Förderbereich der Abstand von Führungseinheit und Fördervorrichtung durch zumindest ein Stellmittel einstellbar, um die Vorrichtung an unterschiedliche Krautsorten und -zustände anzupassen. Beispielsweise kann es vorteilhaft ein, eher feuchtes, frischeres Kraut aufgrund seiner höheren Flexibilität durch einen engeren Förderbereich zu führen.

Vorzugsweise sind die Führungseinheit und die Fördervorrichtung zumindest teilweise übereinander angeordnet. Das im Betrieb im Gutstrom einer Erntemaschine vorhandene Kraut ist oftmals mit einer Hauptlängsrichtung liegend, d.h. mit einer größeren Erstreckung in einer Ebene parallel oder nur leicht angewinkelt zur Förderebene als senkrecht dazu versehen. Es kann, falls es aufläuft, somit besser in den zwischen Führungseinheit und Fördervorrichtung ausgebildeten Förderbereich einlaufen. Ein weiteres Aufstauen wird durch die zusätzlich auf den Gutstrom einwirkende Fördervorrichtung vermieden. Ergänzend kann die Führungseinheit betrachtet in einer Draufsicht versetzt zu der Fördervorrichtung angeordnet sein, beispielsweise um baulichen Gegebenheiten Rechnung tragen zu können.

Es hat sich für eine definierte Zuführung als vorteilhaft erwiesen, wenn der Förderbereich vorzugsweise mittig zwischen Einlauf und Ende mit einem zumindest im unbelasteten Zustand gleichbleibenden Abstand zwischen Führungseinheit und Fördervorrichtung versehen ist. Führungseinheit und Fördervorrichtung laufen somit über zumindest 5 cm, vorzugsweise zumindest 10 cm parallel zueinander, um das vom Einlauf mit dem weiteren Gutstrom einströmende und mit der Fördervorrichtung gezielt weitergeförderte Kraut soweit es geht zu beruhigen und zur Trennvorrichtung zu führen.

Zur Vermeidung einer Blockade aufgrund von verkantetem und dickerem Kraut kann die Fördervorrichtung relativ zur Führungseinheit beweglich und über einen Kraftspeicher gedämpft angeordnet sein. Es versteht sich, dass die vor- oder nachbeschriebenen Ausführungsformen der erfindungsgemäßen Vorrichtung in einer Relativposition beispielsweise an einem gemeinsamen Rahmen gehalten werden. Hierbei kann es sich um einen Rahmen handeln, der an den Maschinenrahmen angesetzt werden oder von diesem mit ausgebildet werden kann, wenn die Vorrichtung in einer erfindungsgemäßen Erntemaschine zum Einsatz kommt.

Insbesondere weist die Fördervorrichtung ein eine Seite des Förderbereichs begrenzendes und vorzugsweise umlaufendes Zugorgan auf, vorzugsweise in Form einer Förderbandes und/oder einer Förderkette, welches zur Förderung des Krauts von dem Einlauf weg ausgebildet ist. Mit einem solchen Förderorgan kann unter den vorhandenen rauen, bodennahen Bedingungen eine kontrollierte Bewegung des Krauts realisiert werden. Insbesondere ist das für eine gute Förderung des Krauts vorzugsweise zumindest 4 cm breite Förderorgan mit vorzugsweise quer zur Förderrichtung verlaufenden Stegen oder Noppen versehen, über die das Kraut mitgenommen wird.

Vorteilhafterweise ist die Fördervorrichtung mit einem umlaufenden Band versehen, welches Kraut in Richtung der Trennvorrichtung fördern kann, und welches zumindest im Einlauf-nahen Bereich in einer Richtung quer zur Förderrichtung über innere Tragelemente zu deren Schutz überstehend ausgebildet ist.

Es hat sich überraschender Weise gezeigt, dass im Betrieb eine optimale Freihaltung des Rahmenelements dann erreicht wird, wenn die Führungseinheit und die Fördervorrichtung erfindungsgemäß zueinander angewinkelte Fördervorrichtungen aufweisen. Z.B. stehen Drehachsen der sich drehenden Antriebselemente von Führungseinheit und Fördervorrichtung angewinkelt zueinander. Somit wird Kraut sowohl über eine insbesondere unten liegende Führungseinheit, die sich um eine in einer Draufsicht vorzugsweise parallel zum Gutstrom ausgerichtete Längsachse dreht, in den Gutstrom zurückgeführt, sowie gleichzeitig, falls eine Rückführung über die Länge des Förderbereichs nicht erfolgt, kontrolliert an die Trennvorrichtung herangeführt.

Vorteilhafterweise weist die Trennvorrichtung ein gegenüber einer quer durch den Förderbereich und zur Förderrichtung, die beispielsweise parallel zur Förderebene von etwaige vorhandenem Gut verläuft, verlaufenden Horizontalen, vorzugsweise 60° bis 90°angewinkeltes Schneidteil auf, vorzugsweise in Form einer Messerschiene mit Gegenschneide. Eine solches als Messerschiene ausgebildetes, hochgestelltes Schneidteil weist zumindest eine in Längsrichtung des Förderbereichs weisende Messerklinge auf, die gegen eine weitere sich ggf. ebenfalls bewegende Messerklinge (als Gegenschneide) oder eine feststehende Gegenschneide schneidet. Alternativ können Schneide und eine etwaige Gegenschneide aneinander entlang schneiden. Insbesondere sind die Messerklingen doppelschneidig und mit einer Spitze, die zum Förderbereich zeigt, ausgebildet.

Das Schneidteil kann je nach Ausbildung eine Hin- und Herbewegung, eine sägezahnartige Bewegung oder bei einer Kreisscheibe mit am Umfang angeordneten Sägezähnen einfach nur eine umlaufende Bewegung ausführen.

Die Messerklinge und/oder die Gegenschneide können zur vereinfachten Wartung über ein Befestigungsmittel lösbar in der Trennvorrichtung angeordnet sein.

Um insbesondere im Fall einer drehbaren unteren Führungseinheit das zugeführte Kraut weiter zu beruhigen und eine ebenfalls gezielte Trennung des Krauts zu bewirken, geht die Führungseinheit vorzugsweise oberflächenbündig in eine flächige Ablage über, die an die Trennvorrichtung heranreicht. Diese bildet dann mit der Fördervorrichtung den Förderbereich fort. Im Betrieb der Vorrichtung wird während des Trennvorgangs, insbesondere während des Schneidens, das Kraut somit nicht mehr seitlich in Richtung des Gutstroms verlagert, so dass die Trennung ungehindert durchgeführt werden kann. Es kann je nach Ausbildung der Trennvorrichtung und der Fördervorrichtung allerdings auch vorteilhaft sein, wenn die Fördervorrichtung in eine Ablage übergeht. Dies gilt insbesondere dann, wenn durch eine seitliche Bewegung des Krauts der Trennvorgang unterstützt werden kann.

Vorzugsweise umfasst die Ablage zumindest teilweise die Trennvorrichtung, um einen möglichst genauen Arbeitsbereich für die Trennvorrichtung zu umgrenzen bzw. zu definieren.

Zur Unterstützung des Weiterleitens von getrennten Krautsegmenten in Richtung des jeweiligen Gutstroms weist die Vorrichtung vorteilhafterweise eine Ausbildung auf, in der die Führungseinheit und/oder die Fördervorrichtung mit ihrem Förderorgan an der vorzugsweise quer hierzu angeordneten Trennvorrichtung vorbeiführen. Getrenntes Kraut kann somit direkt weiter von der Führungseinheit und/oder der Fördervorrichtung weitergeführt werden.

Läuft die Fördervorrichtung mit Ihrem Förderorgan in Längsrichtung des Förderbereichs betrachtet an der Trennvorrichtung vorbei, ist der Abstand zwischen Fördervorrichtung und der Trennvorrichtung bevorzugt kleiner als 5 cm, noch bevorzugter kleiner als 3 cm, so dass auch nur kurze, abgetrennte Krautsegmente weitestgehend erfasst bleiben können.

In einer bevorzugten weiteren Ausbildung mit zwei insbesondere als Bandförderer ausgebildeten Fördervorrichtungen führen diese vorzugsweise auf unterschiedlichen Seiten an der Trennvorrichtung vorbei. Diese beiden Bandförderer bilden dann gemeinsam mit der Führungseinheit den Förderbereich aus.

Zur Anpassung der erfindungsgemäßen Vorrichtung an unterschiedliche Maschinentypen genauso wie an unterschiedliche Kraut- und/oder Gutströme weisen zumindest die Führungseinheit und die Fördervorrichtung getrennte und insbesondere getrennt steuerbare Antriebe auf. Diese Antriebe können über eine eigene Steuerung mit eigener Bedieneinheit verfügen, sind jedoch bei Integration in eine Erntemaschine vorzugsweise in deren Steuerung mit integriert. Beispielsweise kann die Geschwindigkeit der Förderbänder des Gutstroms die Geschwindigkeit der Fördervorrichtung beeinflussen. Darüber hinaus kann diese z.B. elektronisch über Lastsensoren gesteuert oder manuell angepasst werden, um Stauen im Förderbereich zu vermeiden.

Insbesondere ist die Vorrichtung an dem Rahmenelement befestigt, was vor dem Hintergrund der einfachen Nachrüstbarkeit der bereits im Betrieb befindlichen sowie der Ergänzung der neu zu bauenden Erntemaschinen kostengünstig und platzsparend ist.

Ebenfalls ist die Erntemaschine auf einfach herzustellende Weise kostengünstig weitergebildet, wenn das Rahmenelement zumindest einen Teil der Führungseinheit ausbildet.

Durch eine Steuerelektronik der Vorrichtung, die in die Steuerung der Erntemaschine integriert ist, wird das Aufstauen an etwaigen Rahmenelementen insbesondere automatisiert ansonsten jedoch von dem Bedienpersonal zentral gesteuert verhindert. Der Steuerelektronik bzw. der zugehörigen Regelung der Vorrichtung kann eine Kamera zur Anzeige des Förderbereichs und/oder eine Lastüberwachung der Trenn- und/oder der Fördervorrichtung zugeordnet sein, über die auf mögliche Fehler im Betrieb der Vorrichtung hingewiesen werden kann.

Weitere Vorteile und Einzelheiten der Erfindung sind der nachfolgenden Figurenbeschreibung zu entnehmen. Schematisch dargestellt zeigt:
Fig. 1 eine perspektivische Darstellung einer erfindungsgemäßen Erntemaschine,
Fig. 2 eine teilweise Seitenansicht des Gegenstands nach Fig. 1,
Fig. 3 den Gegenstand nach Fig. 2 in einer perspektivischen Ansicht,
Fig. 4 den Gegenstand nach Fig. 3 in einer verschwenkten Ansicht,
Fig. 5 eine Vorrichtung zur Verhinderung des Aufstauens von Kraut an einem Rahmenelement in einer Schnittdarstellung,
Fig. 6 eine weitere erfindungsgemäße Erntemaschine in einer teilweisen Darstellung.

Falls dienlich sind gleichwirkende Elemente mit identischen Bezugsziffern versehen. Einzelne Merkmale der nachfolgend beschriebenen Ausführungsbeispiele können in Kombination mit den Merkmalen der unabhängigen Ansprüche sowie ggf. weiterer Ansprüche ebenfalls zu erfindungsgemäßen Gegenständen führen.

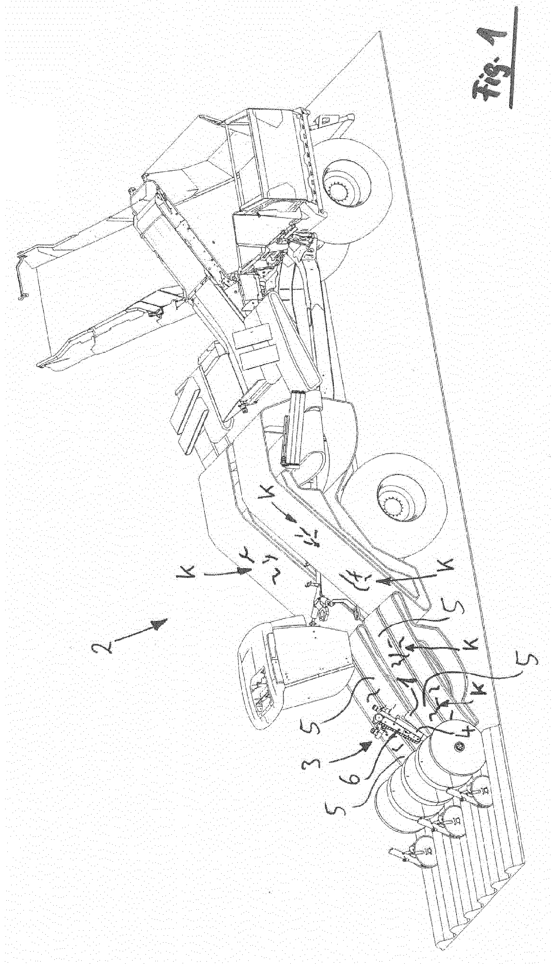

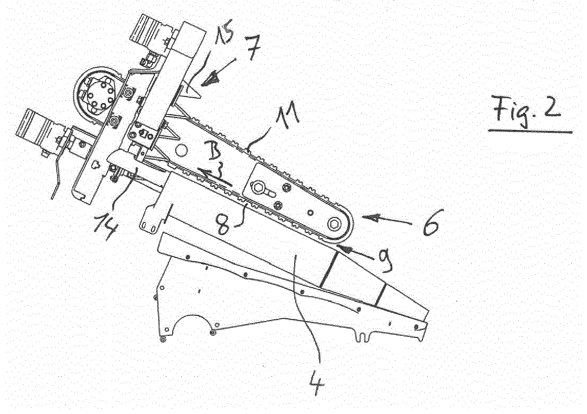

An einem Rahmenelement 1 einer erfindungsgemäßen Erntemaschine 2 ist eine Vorrichtung 3 zur Verhinderung eines Aufstauens von in einem vor einem Rahmenelement 1 aufzuteilenden, nicht dargestelltem Gutstrom einer Erntemaschine 2 vorhandenen Kraut K vor dem Rahmenelement 1 befestigt (vgl. Fig. 1 und 2). Die Vorrichtung 3 umfasst eine vorzugsweise drehbare Führungseinheit 4 sowie weiterhin zumindest eine Fördervorrichtung 6 und eine Trennvorrichtung 7, wobei die Führungseinheit 4 und die Fördervorrichtung 6 zwischen sich einen Förderbereich 8 ausbilden, durch den von einem Einlauf 9 des Förderbereichs 8 zu förderndes Kraut zu der vorzugsweise am Ende des Förderbereichs 8 befindlichen Trennvorrichtung 7 gefördert werden kann.

Führungseinheit 4 und Fördervorrichtung 6 sind übereinander angeordnet, wobei sie in einer Draufsicht betrachtet in Richtung Ihrer Längserstreckung im Wesentlichen parallel zur Längsrichtung von Förderabschnitten 5 der Förderbänder der Erntemaschine 2 und somit parallel zu einem etwaig vorhandenen Gutstrom ausgerichtet sind. Das Rahmenelement 1 ragt angewinkelt aus der durch die Oberfläche der Förderbänder bzw. Förderabschnitte 5 definierten Fläche heraus. Der Einlauf 9 und somit der Förderbereich 8 sind direkt zum ankommenden Gutstrom hin gerichtet.

Gemäß den Fig. 2 bis 5 weist die Fördervorrichtung 6 ein eine obere Seite des Förderbereichs 8 begrenzendes, umlaufendes Zugorgan 11 auf, welches zur Förderung des Krauts K weg von dem Einlauf 9 ausgebildet ist. Hierfür sind quer zur Förderrichtung verlaufende Stege 10 vorgesehen, mit denen das Kraut K in Richtung der Trennvorrichtung 7, die vorliegend mit aneinander entlang laufenden Schneidteilen 13 in etwa nach Art einer einseitigen Heckschere versehen ist, transportiert wird. Im Betrieb vorhandenes Kraut K, welches über den Einlauf 9 in den Förderbereich 8 zwischen Fördervorrichtung 6 und Führungseinheit 4 gelangt, wird einerseits über die Führungseinheit 4 mit ihrer Förderrichtung A wieder in Richtung der Abschnitte 5 bewegt. Andererseits wird vorhandenes Kraut gezielt zwischen der Außenoberfläche der Führungseinheit 4 und der des Zugorgans 11 bzw. der Fördervorrichtung in deren Förderrichtung B transportiert. Die Kombination der beiden Förderrichtungen führt dazu, dass nur das nicht mehr aus dem Förderbereich herausbewegte Kraut K kontrolliert der Trennvorrichtung 3 zugeführt wird.

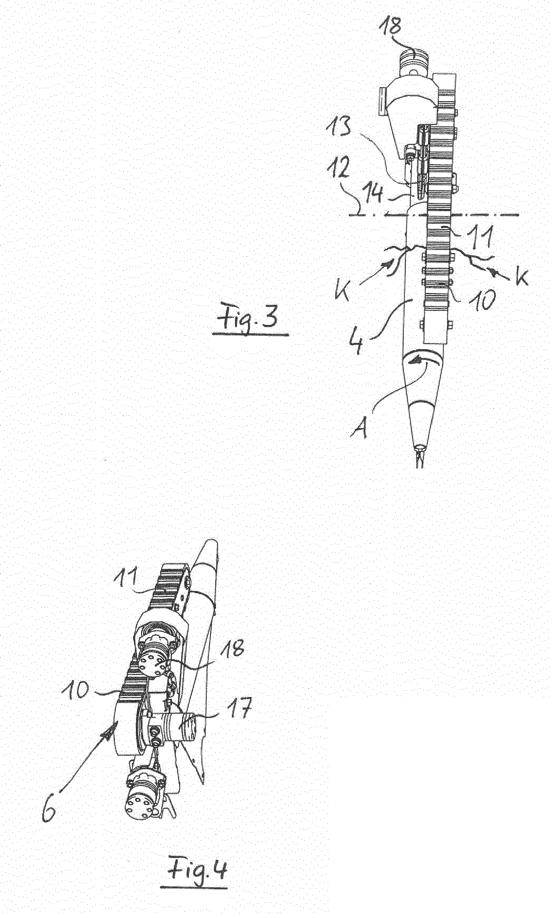

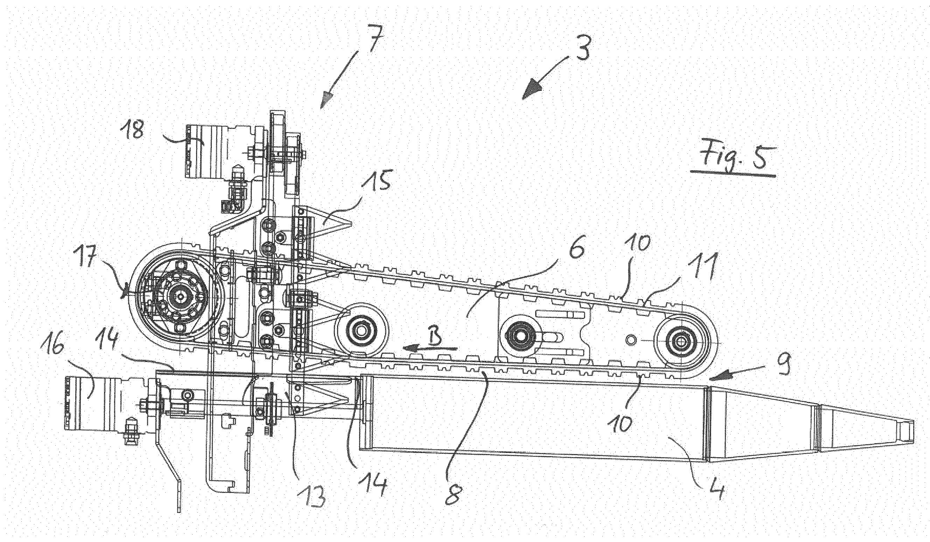

Eine Horizontale 12 (Fig. 3) verläuft quer durch den Förderbereich und indiziert die Längserstreckung des in diesem Kanal transportierten Krauts K. Entsprechend ist es vorteilhaft, die insbesondere schneidende Trennvorrichtung mit der Schnittrichtung senkrecht, zumindest jedoch in einem Bereich von 60° bis 90° auszurichten. Während die Schnittrichtung anschaulich in Fig. 5 in der Figurenebene verläuft, steht die in der Fig. 3 dargestellte horizontale Gerade 12 senkrecht aus der Figurenebene der Fig. 5 heraus. Die Bewegungsrichtung der Klingen 15 der beiden bewegten Schneidteile der Trennvorrichtung liegt in der Fig. 5 in der Figurenebene.

Zur definierten Ausrichtung des transportierten Krauts K geht die untere Führungseinheit 4 in eine flächige Ablage 14 über, die die Schneidteile der Trennvorrichtung 7 wie in Fig. 2 ersichtlich umfasst. Die Fördervorrichtung 6 führt an der mit Ihrer Längserstreckung, die im Wesentlichen durch die Längserstreckung der Schneidteile 13 definiert ist, an der quer hierzu ausgerichteten bzw. angeordneten Trennvorrichtung 7 vorbeiführen, wobei der Abstand zwischen einem Förderorgan der Fördervorrichtung und der Trennvorrichtung kleiner als 5 cm ist.

Über separat ansteuerbare Antriebe 16 der Führungseinheit 4, den Antrieb 17 der Fördervorrichtung 6 sowie den Antrieb 18 der Trennvorrichtung 7 ist die erfindungsgemäße Vorrichtung variabel ansteuer- und an lokale Gegebenheiten anpassbar.

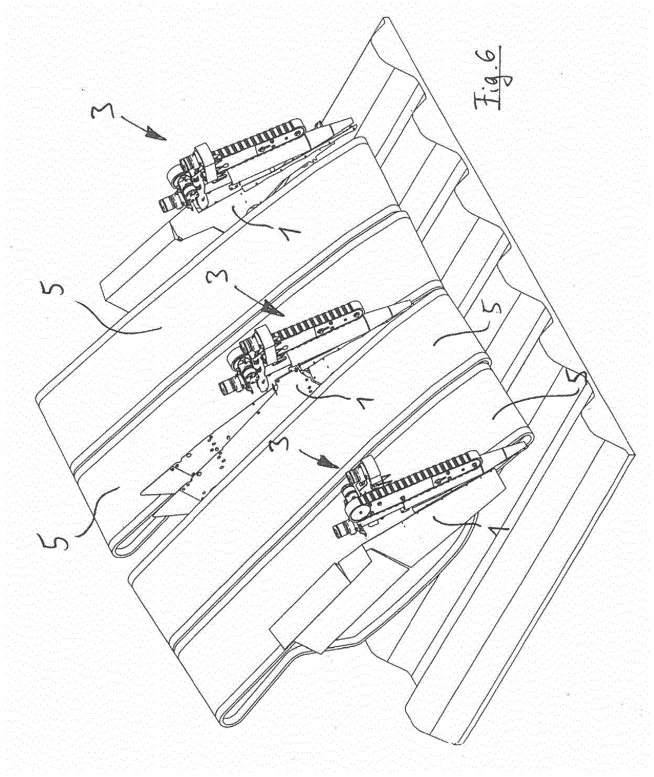

Die erfindungsgemäßen Vorrichtungen können vorzugsweise auf der gleichen Höhe der Förderabschnitte 5 sowohl mittig als auch den Rändern der Förderstrecke der in der Fig. 6 nur teilweise dargestellten Erntemaschine angeordnet werden.

## Patentansprüche

1. Erntemaschine für mit abzutrennendem Kraut (K) versehenes Erntegut, mit einem Rahmenelement (1), an dem wenigstens ein einen im Betrieb vorhandenen Gutstrom transportierender Förderabschnitt (5) entlangführt, wobei wenigstens eine Vorrichtung (3), die zur Verhinderung eines Aufstauens von in dem Gutstrom der Erntemaschine (2) vorhandenen Kraut (K) an dem Rahmenelement (1) ausgebildet ist, zumindest eine Fördervorrichtung (6), eine Trennvorrichtung (7) und eine drehbare Führungseinheit (4) aufweist, wobei die Fördervorrichtung (6) eine Seite eines Förderbereichs (8) ausbildet, durch den von einem Einlauf (9) des Förderbereichs (8) zu förderndes Kraut (K) zu der vorzugsweise am Ende des Förderbereichs (8) befindlichen Trennvorrichtung (7) gefördert werden kann, und wobei die Führungseinheit (4) und die Fördervorrichtung (6) zwischen sich den Förderbereich (8) ausbilden und im Betrieb zueinander angewinkelte Förderrichtungen (A,B) aufweisen.

2. Erntemaschine nach Anspruch 1, **dadurch gekennzeichnet, dass** die Führungseinheit (4) durch ein an dem Rahmenelement (1) anzuordnendes Blech ausgebildet ist.

3. Erntemaschine nach Anspruch 1 oder 2, **dadurch gekennzeichnet, dass** die Führungseinheit (4) und die Fördervorrichtung (6) zumindest teilweise übereinander angeordnet sind.

4. Erntemaschine nach Anspruch 3, **dadurch gekennzeichnet, dass** die untere Führungseinheit (4) oder die Fördervorrichtung (6) vorzugsweise oberflächenbündig in eine flächige Ablage (14) übergeht, die an die Trennvorrichtung (7) heranreicht.

5. Erntemaschine nach einem der vorherigen Ansprüche 1 bis 4, **dadurch gekennzeichnet, dass** die Führungseinheit (4) und/oder die Fördervorrichtung an der vorzugsweise quer hierzu angeordneten Trennvorrichtung (7) vorbeiführen.

6. Erntemaschine nach einem der vorherigen Ansprüche 1 bis 5, **dadurch gekennzeichnet, dass** die Führungseinheit (4), die Trennvorrichtung (7) und/oder die Fördervorrichtung (6) getrennte und insbesondere getrennt steuerbare Antriebe (16,17, 18) aufweisen.

7. Erntemaschine nach einem der vorherigen Ansprüche, **dadurch gekennzeichnet, dass** die Fördervorrichtung (6) ein die Seite des Förderbereichs (8) begrenzendes und insbesondere umlaufendes Zugorgan (11) aufweist, welches zur Förderung des Krauts (K) von dem Einlauf (9) weg ausgebildet ist.

8. Erntemaschine nach einem der vorherigen Ansprüche, **dadurch gekennzeichnet, dass** die Trennvorrichtung (7) ein gegenüber einer quer durch den Förderbereich und zur Förderrichtung verlaufenden Horizontalen (12) vorzugsweise 60° bis 90°angewinkeltes Schneidteil (13), vorzugsweise in Form einer Messerschiene mit Gegenschneide, aufweist.

9. Erntemaschine nach einem der vorherigen Ansprüche, **dadurch gekennzeichnet, dass** die Vorrichtung an dem Rahmenelement (1) befestigt ist.

10. Erntemaschine nach einem der vorherigen Ansprüche, **gekennzeichnet durch** eine Steuerelektronik der Vorrichtung (3), die in die Steuerung der Erntemaschine (2) integriert ist.

11. Erntemaschine nach einem der vorherigen Ansprüche, **dadurch gekennzeichnet, dass** das Rahmenelement zumindest einen Teil der Führungseinheit ausbildet.

## Claims

1. Harvesting machine for crop which is provided together with foliage (K) that is to be separated off, having a frame element (1), along which at least one conveying section (5) transporting a crop flow present during operation is guided, wherein at least one device (3) which is designed for preventing an accumulation of foliage (K), which is present in the crop flow of the harvesting machine (2), on the frame element (1) has at least one conveying device (6), a separating device (7) and a rotatable guide unit (4), wherein the conveyor device (6) forms one side of a conveyor region (8) through which foliage (K) that is to be conveyed from an inlet (9) of the conveying region (8) can be conveyed to the separating device (7), which is preferably located at the end of the conveyor region (8), and wherein the guide unit (4) and the conveyor device (6) form the conveyor region (8) between them and have conveying directions (A, B) which are angled with respect to each other during operation.

2. Harvesting machine according to Claim 1, **characterized in that** the guide unit (4) is formed by a metal sheet to be arranged on the frame element (1) .

3. Harvesting machine according to Claim 1 or 2, **characterized in that** the guide unit (4) and the conveying device (6) are at least partially arranged one above the other.

4. Harvesting machine according to Claim 3, **characterized in that** the lower guide unit (4) or the conveying device (6) merges, preferably flush in terms of its surface, into a flat depositing means (14) which reaches to the separating device (7) .

5. Harvesting machine according to one of the preceding Claims 1 to 4, **characterized in that** the guide unit (4) and/or the conveying device lead past the separating device (7), which is preferably arranged transversely with respect thereto.

6. Harvesting machine according to one of the preceding Claims 1 to 5, **characterized in that** the guide unit (4), the separating device (7) and/or the conveying device (6) have drives (16, 17, 18) which are separate and are in particular controllable separately.

7. Harvesting machine according to one of the preceding claims, **characterized in that** the conveying device (6) has an in particular revolving traction member (11) which delimits the side of the conveying region (8) and is designed for conveying the foliage (K) away from the inlet (9).

8. Harvesting machine according to one of the preceding claims, **characterized in that** the separating device (7) has a cutting part (13), preferably in the form of a knife rail with a counter blade, which is at a preferably 60° to 90° angle in relation to a horizontal (12) running transversely through the conveying region and to the conveying direction.

9. Harvesting machine according to one of the preceding claims, **characterized in that** the device is fastened to the frame element (1).

10. Harvesting machine according to one of the preceding claims, **characterized by** an electronic control unit of the device (3) integrated in the control system of the harvesting machine (2).

11. Harvesting machine according to one of the preceding claims, **characterized in that** the frame element forms at least part of the guide unit.

## Revendications

1. Machine de récolte pour un produit de récolte doté de fanes (K) à séparer, comportant un élément de cadre (1) que longe moins une section de convoyage (5) transportant un flux de produit présent lors du fonctionnement, au moins un dispositif (3), qui est réalisé sur l'élément de cadre (1) pour empêcher une accumulation de fanes (K) présentes dans le flux de produits de la machine de récolte (2), présentant au moins un dispositif de convoyage (6), un dispositif de séparation (7) et une unité de guidage (4) rotative, le dispositif de convoyage (6) formant un côté d'une région de convoyage (8) au moyen de laquelle les fanes (K) à convoyer à partir d'une entrée (9) de la région de convoyage (8) peuvent être convoyées jusqu'au dispositif de séparation (7) se trouvant de préférence à l'extrémité de la région de convoyage (8), et l'unité de guidage (4) et le dispositif de convoyage (6) formant entre eux la région de convoyage (8) et présentant des directions de convoyage (A, B) inclinées l'une par rapport à l'autre lors du fonctionnement.

2. Machine de récolte selon la revendication 1, **caractérisée en ce que** l'unité de guidage (4) est réalisée par une tôle devant être disposée sur l'élément de cadre (1).

3. Machine de récolte selon la revendication 1 ou 2, **caractérisée en ce que** l'unité de guidage (4) et le dispositif de convoyage (6) sont au moins partiellement superposés.

4. Machine de récolte selon la revendication 3, **caractérisée en ce que** l'unité de guidage (4) inférieure ou le dispositif de convoyage (6) se prolonge de préférence en affleurement de surface dans un espace de stockage (14) plan qui s'étend jusqu'au dispositif de séparation (7).

5. Machine de récolte selon l'une des revendications précédentes 1 à 4, **caractérisée en ce que** l'unité de guidage (4) et/ou le dispositif de convoyage passent devant le dispositif de séparation (7) disposé de préférence transversalement à celui-ci.

6. Machine de récolte selon l'une des revendications précédentes 1 à 5, **caractérisée en ce que** l'unité de guidage (4), le dispositif de séparation (7) et/ou le dispositif de convoyage (6) présentent des entraînements (16, 17, 18) séparés et en particulier pouvant être commandés séparément.

7. Machine de récolte selon l'une des revendications précédentes, **caractérisée en ce que** le dispositif de convoyage (6) présente un organe de traction (11) délimitant le côté de la région de convoyage (8) et en particulier tournant, lequel organe est réalisé pour le convoyage des fanes (K) à l'écart de l'entrée (9).

8. Machine de récolte selon l'une des revendications précédentes, **caractérisée en ce que** le dispositif de séparation (7) présente une partie de coupe (13) inclinée de préférence de 60° à 90° par rapport à une horizontale (12) s'étendant transversalement à travers la région de convoyage et par rapport à la direction de convoyage, de préférence sous la forme d'un rail de couteaux doté d'un contre-tranchant.

9. Machine de récolte selon l'une des revendications précédentes, **caractérisée en ce que** le dispositif est fixé à l'élément de cadre (1).

10. Machine de récolte selon l'une des revendications précédentes, **caractérisée par** une électronique de commande du dispositif (3), qui est intégrée dans la commande de la machine de récolte (2).

11. Machine de récolte selon l'une des revendications précédentes, **caractérisée en ce que** l'élément de cadre forme au moins une partie de l'unité de guidage.
